# FASCICULE DE BREVET EUROPEEN

(11) **EP 1 788 464 B1**
(45) Date de publication et mention de la délivrance du brevet: **23.01.2008**
(21) Numéro de dépôt: 06024131.2
(22) Date de dépôt: 21.11.2006
(51) Int. Cl.: G05B 19/045

(54) **Dispositif de configuration d'un actionneur domotique**
Konfigurationsgerät für Gebäudeaktuatoren
Configuration apparatus for domestic actuator

(30) Priorité: 22.11.2005 FR 0511809
(43) Date de publication de la demande: 23.05.2007
(73) Titulaire: Somfy SAS, 74300 Cluses (FR)
(72) Inventeur: Müller, Thomas, 72336 Balingen (DE); Reiner, Thomas, 72810 Gomaringen (DE); Schoen, Hendrik, 72070 Tübingen-Hirschau (DE); Deibler, Karl-Eugen, 72145 Hirrlingen (DE); Tscherny, Georg, 71155 Altdorf (DE)
(74) Mandataire: Bugnion Genève

(56) Documents cités:
- EP-A- 1 160 415
- EP-A- 1 172 516

## Description

L'invention concerne un dispositif de configuration d'un actionneur domotique selon le préambule de la revendication 1. Elle concerne aussi un procédé de détermination automatique du type d'un actionneur.

L'invention concerne notamment un dispositif de configuration d'un actionneur d'un élément mobile du bâtiment. Cet élément mobile peut par exemple consister en un volet roulant, en un store, en une fenêtre, en une porte de garage ou en un portail.

Par configuration, on entend par exemple toute procédure permettant de définir, modifier ou supprimer une position particulière de l'élément mobile (position de fin de course ou position intermédiaire) dans laquelle l'alimentation de l'actionneur doit être coupée et toute procédure permettant de contrôler le sens de rotation du moteur en réponse à un ordre de commande. De manière plus générale, la configuration est une procédure dans laquelle il y a apprentissage au sein de l'actionneur.

Différents types d'actionneurs domotiques existent. Parmi ces types, on distingue les actionneurs comportant un système mécanique de repérage de position particulière ou de détection de butée ou d'obstacle. Ces actionneurs comportent trois fils d'alimentation : un fil de neutre, un premier fil de phase et un second fil de phase. Selon que la tension du réseau alternatif commercial est appliquée entre le neutre et le premier ou le deuxième fil de phase, le moteur tourne dans un premier sens ou un deuxième sens, jusqu'à ce que soient détectés une position particulière, une butée ou un obstacle. On désigne ces actionneurs par les termes : « actionneur à détection mécanique ».

On distingue également les actionneurs comportant un système électronique de repérage de position particulière ou de détection de butée ou d'obstacle. Parmi ces derniers, on distingue enfin les actionneurs recevant les ordres de commande de mouvement au moyen du câble d'alimentation, comme précédemment décrit, et les actionneurs recevant les ordres de commande de mouvement au moyen d'ondes électromagnétiques. Dans ce dernier cas, l'actionneur comporte deux fils d'alimentation : un fil de phase et un fil de neutre, pour la liaison au réseau alternatif commercial.

On désigne ces actionneurs par les termes : « actionneur à détection électronique et commande filaire » et « actionneur à détection électronique et commande radio ».

Des méthodes et des dispositifs de configuration de ces actionneurs sont connus. On connaît par exemple, pour ce qui est des actionneurs à détection électronique et commande filaire, les méthodes et les dispositifs décrits dans les documents EP 1 160 415, EP 0 426 577, EP 0 770 757, US 5,850,131 et DE 298 09 592 et pour ce qui est des actionneurs à détection électronique et commande radio, les méthodes et les dispositifs décrits dans les documents EP 1 274 199, US 2002/196376 et DE 201 02 366. Le brevet US 5,374,791 décrit un système de détection et apprentissage mécanique de position, pour actionneur à détection mécanique.Bien que certains de ces dispositifs soient compatibles pour effectuer la configuration des actionneurs à détection mécanique et des actionneurs à détection électronique et commande filaire, un dispositif différent est nécessaire pour effectuer la configuration des actionneurs à détection électronique et commande radio. En conséquence, l'installateur professionnel doit être équipé de différents dispositifs pour être en mesure de réaliser la configuration des différents types d'actionneurs.

Le but de l'invention est de fournir un dispositif de configuration d'actionneurs permettant de remédier au problème identifié ci-dessus et d'améliorer les dispositifs de configuration connus de l'art antérieur. En particulier, l'invention propose un dispositif de configuration simple pour l'utilisateur, permettant d'effectuer la configuration des différents types d'actionneurs.

Le dispositif de configuration selon l'invention est caractérisé par la partie caractérisante de la revendication 1.

Différents modes de réalisation du dispositif de configuration selon l'invention sont définis par les revendications dépendantes 2 à 9.

Le procédé selon l'invention est défini par la revendication 10.

Le dessin annexé représente, à titre d'exemple, un mode de réalisation du dispositif de configuration selon l'invention et un mode d'exécution d'un procédé de détermination du type d'actionneur relié au dispositif de configuration.

La figure 1 est un schéma d'un mode de réalisation du dispositif de configuration selon l'invention.

La figure 2 est un ordinogramme d'un mode d'exécution du procédé de détermination.

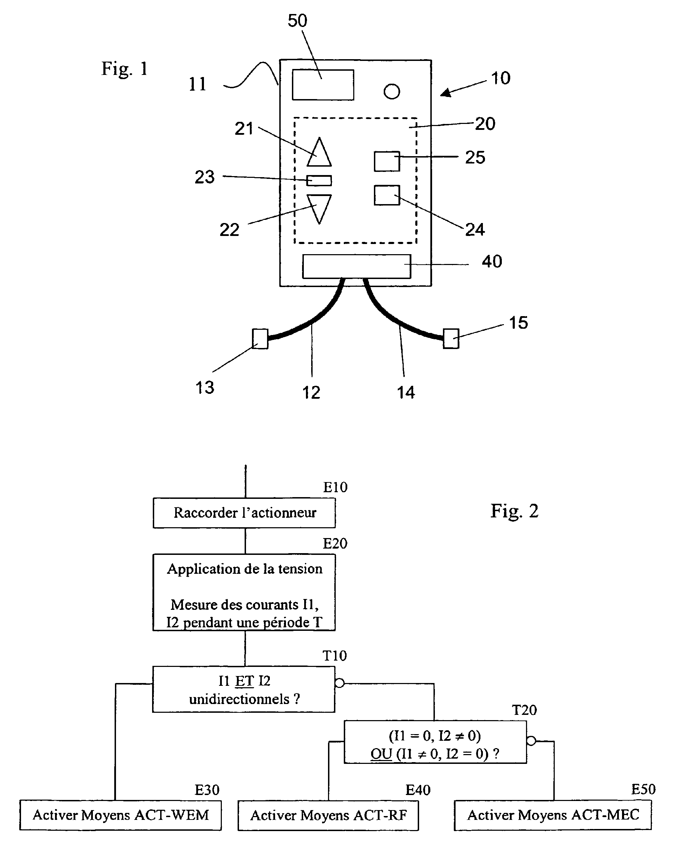

Le dispositif 10, représenté à la figure 1, permet de réaliser la configuration d'actionneurs domotiques. Le terme « configuration » doit être compris comme incluant notamment au moins l'une des actions suivantes :
- le basculement de l'actionneur dans un mode dans lequel il est susceptible de stocker des informations et/ou des données telles que des informations de positions de fins de course, des informations de positions intermédiaires ou des paramètres de fonctionnement,
- la première définition d'une position de fin de course de l'élément mobile,
- la première définition d'une position intermédiaire de l'élément mobile,
- la modification d'une position de fin de course de l'élément mobile,
- la modification d'une position intermédiaire de l'élément mobile,
- la suppression d'une position de fin de course de l'élément mobile,
- la suppression d'une position intermédiaire de l'élément mobile,
- la suppression de toutes les positions de fin de course de l'élément mobile,
- la suppression de toutes les positions intermédiaires de l'élément mobile,
- la suppression de toutes les informations et/ou données stockées dans l'actionneur,
- le contrôle du sens adéquat du mouvement de l'actionneur en réponse à un ordre de commande,
- le réglage en position de l'élément mobile jusqu'à atteindre une position de fin de course non encore enregistrée.

Le dispositif de configuration 10 comprend principalement une interface de configuration 11 reliée électriquement à un premier câble 12 à trois conducteurs (un premier fil susceptible d'être relié à la phase d'une source de tension, un deuxième fil susceptible d'être relié à la phase de la source de tension et un troisième fil susceptible d'être relié au neutre de la source de tension). Ce câble comprend à l'une de ses extrémités une fiche 13 de connexion permettant de relier électriquement et de manière amovible un actionneur à programmer au câble et, par conséquent, de relier électriquement et de manière amovible un actionneur à programmer à l'interface de configuration. De préférence, on utilise une fiche permettant des connexions et des déconnexions simples et rapides. Différents types de fiches peuvent être utilisés, notamment des fiches de type Hirschmann. Ce câble permet notamment d'alimenter électriquement l'actionneur lors de la configuration. Le dispositif de configuration peut de plus comprendre un deuxième câble 14 terminée par une fiche et permettant la liaison au réseau électrique de distribution. Le deuxième câble 14 comprend un conducteur de phase et un conducteur de neutre.

Alternativement, le dispositif de configuration peut être autonome et comprendre pour ce faire des moyens de stockage d'énergie électrique. Par exemple, le dispositif de configuration peut comprendre une source électrique embarquée 50 présentant une batterie d'accumulateur, une pile à combustible ou un panneau photovoltaïque associé à un condensateur de forte capacité et un onduleur. La source de tension est alors intégrée au dispositif de configuration plutôt qu'être constituée par le réseau alternatif commercial. Cette variante est utile lorsque le raccordement électrique sur le chantier est difficile. Par convention, les deux sorties de l'onduleur constituent les bornes de phase et de neutre de la source d'énergie autonome.

Le réseau électrique de distribution raccordé au câble 14 ou la source électrique embarquée 50 constituent donc une source de tension pour l'actionneur.

Pour assurer une manipulation aisée du dispositif de configuration, les premier et deuxième câbles sont raccordés à l'interface de configuration au niveau d'une même face et de préférence au niveau de la face inférieure de l'interface. Des moyens telle qu'une sangle peuvent être prévus pour maintenir les câbles dans une position repliée lorsque le dispositif de configuration n'est pas utilisé. De plus, le dispositif de configuration peut comprendre des moyens pour lui permettre d'être suspendu, par exemple suspendu à un mur.

L'interface de configuration 11 comprend un moyen de saisie constitué par exemple par un clavier 20 présentant plusieurs boutons 21, 22, 23, 24 et 25 associés à des interrupteurs. Un autre type de moyen de saisie peut être utilisé.

L'interface de configuration comprend des moyens de configuration d'actionneur à détection mécanique, des moyens de configuration d'actionneur à détection électronique et commande filaire et des moyens de configuration d'actionneur à détection électronique et commande radio, ces différents moyens étant activés par actions sur le clavier 20.

Un appui sur le bouton 21 permet d'appliquer la phase de la source de tension sur le premier fil du premier câble 12 et, par conséquent de donner un ordre de mouvement dans un premier sens à un actionneur à détection mécanique. Un appui sur le bouton 22 permet d'appliquer la phase de la source de tension sur le deuxième fil du premier câble 12 et, par conséquent de donner un ordre de mouvement dans un deuxième sens à cet actionneur. Un appui sur le bouton 23 permet d'arrêter l'application de la phase de la source de tension et, par conséquent de donner un ordre d'arrêt de mouvement à cet actionneur. Dans ces trois fonctionnements, le neutre de la source de tension est appliqué au troisième fil du premier câble 12.

Ces boutons et les interrupteurs qui y sont associés font par conséquent partie de moyens de configuration d'actionneur à détection mécanique. En effet, ils permettent par exemple le réglage du sens de rotation de l'actionneur en réponse à un ordre de commande donné. Pour ce faire, l'installateur appuie sur l'un des boutons 21 ou 22. Il observe alors le sens de rotation de l'actionneur et intervient éventuellement directement au niveau de l'actionneur pour modifier ce sens de rotation.

De même, ils permettent le réglage des positons de fin de course. Pour ce faire, l'installateur appuie sur les boutons 21 ou 22 pour amener l'actionneur dans une position devant être enregistrée comme étant une position de fin de course. Une fois dans cette position, il intervient directement au niveau de l'actionneur, sur les moyens d'enregistrement mécanique, pour enregistrer cette position comme étant une position de fin de course. Lors d'appuis sur les boutons 21 ou 22, la source de tension est appliquée entre deux fils du premier câble.

Un appui sur le bouton 24 permet d'appliquer la phase de la source de tension simultanément sur les premier et deuxième fils du premier câble 12, le neutre de la source de tension étant appliqué sur le troisième fil du premier câble. La conséquence de cet appui est détectable par un actionneur à détection électronique et commande filaire : elle est interprétée comme un ordre de basculement de l'actionneur dans un mode de configuration dans lequel des données et/ou des informations peuvent être stockées. Ce bouton et l'interrupteur qui y est associé fait par conséquent partie de moyens de configuration d'actionneur à détection électronique et commande filaire. Une fois l'actionneur dans ce mode de fonctionnement différentes séquences d'appuis sur les touches 21, 22 et 23 sont détectables par l'actionneur et correspondent à diverses opérations de modifications de l'état des mémoires de l'actionneur : ajout de nouvelles données, suppression de certaines données, modification de certaines données. Ces données définissant notamment le sens de rotation de l'actionneur en réponse à un ordre de commande donné ou des positions particulières telles que des positions de fin de course.

Un appui sur le bouton 25 permet d'interrompre, pendant une durée calibrée ou selon une séquence déterminée, l'alimentation électrique d'un actionneur à détection électronique et commande radio. La séquence déterminée consiste par exemple en une première interruption de 5 secondes, un rétablissement de la tension pendant 3 secondes, une nouvelle interruption de 5 secondes et le rétablissement de la tension. Ainsi, entre les interruptions, la source de tension est appliquée entre deux fils du premier câble. Le bouton 25 agit sur l'application de cette tension en l'interrompant.

Un tel actionneur à détection électronique et commande radio a son fil de phase indifféremment raccordé au premier fil ou au deuxième fil du premier câble 12, et son fil de neutre raccordé au troisième fil du premier câble 12. L'appui sur le bouton 25 supprime la liaison entre le neutre de la source de tension et ce troisième fil.

La conséquence de cet appui est détectable par l'actionneur : elle est interprétée comme un ordre de réinitialisation de l'actionneur. Une fois réinitialisé, l'actionneur est susceptible de communiquer avec n'importe quel émetteur d'ordres utilisant le même protocole de communication radio. Ce bouton et l'interrupteur qui y est associé fait par conséquent partie de moyens de configuration d'actionneur à détection électronique et commande radio.

L'interface de configuration peut en outre comprendre un moyen 30 d'information de l'utilisateur fournissant un signal sensoriel. Ce moyen peut notamment consister en un indicateur simple tel qu'une diode électroluminescente ou en un écran. Ce moyen permet par exemple d'indiquer si l'actionneur est ou non alimenté, l'état de l'actionneur, le type de l'actionneur ou l'étape de configuration dans laquelle on se trouve.

Il est possible que les actions sur les boutons décrites plus haut soient remplacées par des séquences d'appuis sur un même bouton ou sur différents boutons. De plus, l'appui sur un seul bouton du clavier peut déclencher une séquence prédéfinie d'actions de configuration d'actionneur. Dans ce cas, il est préférable que les séquences exécutables puissent être visualisées sur un écran préalablement à leur exécution afin d'assurer une utilisation simple et rapide du dispositif de configuration.

Dans une variante de réalisation, le dispositif de configuration permet d'identifier le type d'actionneur auquel il est raccordé. Après une étape de communication entre le dispositif de configuration et l'actionneur, ce dernier renvoie un signal d'information signifiant son type. Ce signal peut être un mouvement particulier de l'actionneur qui est détecté et interprété par l'installateur. Ce signal peut aussi être un signal sensoriel d'un autre type par exemple sonore. Alternativement, les actionneurs peuvent être conçus pour répondre à ce type d'interrogation de la part du dispositif de configuration par l'émission d'un signal électrique détecté par le dispositif de configuration. Dans ce cas, le type de l'actionneur raccordé au dispositif de configuration pourrait être signifié à l'installateur par les moyens d'information 30. Celui-ci sait alors quels moyens doivent être mis en oeuvre pour configurer l'actionneur.

De manière préférée, la détermination du type d'actionneur raccordé au dispositif de configuration est automatique, et seuls les moyens pour configurer ce type d'actionneur deviennent opérationnels.

Dans le cas le plus simple, une étape de communication entre le dispositif de configuration et l'actionneur raccordé à celui-ci se réduit à l'application de la phase de la source d'énergie électrique sur le premier et le deuxième fil du premier câble 12 tandis que le neutre de la source est appliqué au troisième fil. La durée d'application de la tension est très courte, par exemple une seule période de tension alternative, soit 20 ms en 50 Hz. Le signal d'information est la mesure du courant absorbé sur les fils du premier câble.

Un mode d'exécution du procédé de détermination est décrit en référence à la figure 2. Dans une première étape E10, l'installateur raccorde électriquement l'actionneur au premier câble 12. Les étapes suivantes se déroulent automatiquement, par exemple après appui par l'installateur sur le bouton 23 pour signifier que le raccordement est effectué. A l'étape E20, un dispositif d'analyse 40, contenu dans le dispositif de configuration, réalise les connexions indiquées ci-dessus pendant une période de la tension alternative. Les courants, respectivement notés I1 et I2, sont mesurés sur le premier et le deuxième conducteur.

Un premier test T10 évalue si les deux courants sont unidirectionnels. Les moteurs à détection électronique et à commande filaire contiennent en effet un module d'alimentation simple alternance raccordé à chaque fil de phase de l'actionneur. Si le premier test T10 est positif, c'est donc qu'il s'agit d'un actionneur de ce type et le procédé passe à l'étape E30 dans lequel sont activés les moyens pour configurer un actionneur à détection électronique et à commande filaire, noté ACT-WEM.

Si ce test est négatif, on passe à un deuxième test T20 dans lequel on évalue si l'un des deux courants est nul sur l'ensemble de la période, alors que l'autre ne l'est pas. Si oui, c'est qu'il s'agit d'un actionneur à détection électronique et à commande radio, puisqu'un tel actionneur ne comporte qu'un seul conducteur de phase. On passe alors à l'étape E40 dans laquelle sont activés les moyens pour configurerrelatifs à un tel actionneur, noté ACT-RF.

Si non, c'est qu'il s'agit d'un actionneur à détection mécanique. On passe alors à l'étape E50 où sont activés les moyens pour configurer un tel actionneur, noté ACT-MEC.

Le procédé est décrit ici dans sa version la plus simple et est susceptible de nombreuses variantes. L'intensité du courant mesuré permet par exemple de différencier, s'il y a lieu, différentes gamme d'actionneurs à l'intérieur d'un même type.

Dans une variante de réalisation du dispositif de configuration, celui-ci comprend en outre un émetteur de signaux électromagnétiques. Dans ce cas, cet émetteur fait partie des moyens de configuration d'actionneur à détection électronique et commande radio. En effet, il permet l'émission d'ordres de configuration tels qu'un ordre d'enregistrement de la position courante de l'actionneur comme une position particulière ou un ordre d'enregistrement de changement de sens de rotation de l'actionneur en réponse à un ordre de commande donné. L'interface de configuration peut en outre être munie d'un récepteur de signaux électromagnétiques lui permettant de recevoir des accusés de réception de signaux reçus par l'actionneur. Dans cette variante, les boutons 21-23 servent également d'organes de commande pour l'émetteur de signaux électromagnétiques.

Le dispositif de configuration d'actionneur selon l'invention présente un intérêt ergonomique important. En effet, il permet de disposer, dans un outil polyvalent muni de câble(s) embrochable(s), de moyens disjoints : d'une part pour la configuration d'un moteur filaire électromécanique et d'autre part pour la configuration d'un moteur électronique de type filaire ou de type radio.

Ces moyens sont essentiellement des moyens de commutation. Leur caractère disjoint facilite la compréhension de l'installateur. Cet intérêt ergonomique est renforcé par un avantage technique de regroupement des fonctions dans un même boîtier de dispositif de configuration puisqu'il s'agit dans tous les cas de contrôler l'application d'une tension d'alimentation sur au moins deux fils d'alimentation de l'actionneur.

## Revendications

1. Dispositif (10) de configuration d'un actionneur domotique comprenant un moteur électrique pour entraîner un élément mobile dans un bâtiment, le dispositif de configuration comprenant une interface utilisateur (11) et un premier câble (12), comprenant une fiche (13) de connexion, pour connecter électriquement et de manière amovible le dispositif de configuration à l'actionneur à configurer, **caractérisé en ce qu'**il comprend des moyens (21, 22, 23) pour configurer un actionneur à détection mécanique, des moyens (24) pour configurer un actionneur à détection électronique et commande filaire et des moyens (25) pour configurer un actionneur à détection électronique et commande radio, chacun des moyens agissant sur l'application d'une source de tension (14, 50) entre au moins deux fils du premier câble.

2. Dispositif de configuration selon la revendication 1, **caractérisé en ce que** les moyens pour configurer un actionneur à détection mécanique comprennent des boutons (21, 22, 23) associés à des interrupteurs permettant d'appliquer un signal de phase sur un premier ou sur un deuxième fil du premier câble.

3. Dispositif de configuration selon la revendication 1 ou 2, **caractérisé en ce que** les moyens pour configurer un actionneur à détection électronique et commande filaire comprennent un bouton (24) associé à un interrupteur permettant d'appliquer simultanément un signal de phase sur un premier et sur un deuxième fil du premier câble.

4. Dispositif de configuration selon l'une des revendications précédentes, **caractérisé en ce que** les moyens pour configurer un actionneur à détection électronique et commande radio comprennent un bouton (25) associé à un interrupteur permettant de couper l'alimentation de l'actionneur.

5. Dispositif de configuration selon la revendication 4, **caractérisé en ce que** les moyens pour configurer un actionneur à détection électronique et commande radio comprennent un émetteur de signaux électromagnétiques.

6. Dispositif de configuration selon la revendication 5, **caractérisé en ce que** les moyens pour configurer un actionneur à détection électronique et commande radio comprennent un récepteur de signaux électromagnétiques.

7. Dispositif de configuration selon l'une des revendications précédentes, **caractérisé en ce qu**'il comprend des moyens (30) d'information de l'utilisateur.

8. Dispositif de configuration selon l'une des revendications précédentes, **caractérisé en ce qu**'il comprend un deuxième câble (14) permettant de le connecter à une source d'énergie électrique externe.

9. Dispositif de configuration selon l'une des revendications précédentes, **caractérisé en ce qu'**il comprend des moyens de mise en oeuvre d'un procédé d'identification du type d'actionneur raccordé au premier câble, ces moyens comprenant des moyens (40) de mesure des courants dans le premier câble.

10. Procédé de détermination automatique du type d'un actionneur, **caractérisé en ce qu'**il comprend une étape de connexion électrique entre l'actionneur et un dispositif et une étape d'analyse de grandeurs électriques par le dispositif pour déterminer si l'actionneur est du type à détection mécanique, à détection électronique et commande filaire ou à détection électronique et commande radio.

## Claims

1. Device (10) for configuring a home automation actuator comprising an electric motor to drive a movable element in a building, the configuration device comprising a user interface (11) and a first cable (12) comprising a connection plug (13) for electrically and removably connecting the configuration device to the actuator to be configured, **characterized in that** it comprises means (21, 22, 23) for configuring a mechanical detection actuator, means (24) for configuring an electronic detection and wire-controlled actuator and means (25) for configuring an electronic detection and radio-controlled actuator, each of the means acting on the application of a voltage source (14, 50) between at least two wires of the first cable.

2. Configuration device according to Claim 1, **characterized in that** the means for configuring a mechanical detection actuator comprise buttons (21, 22, 23) associated with switches making it possible to apply a phase signal to a first or to a second wire of the first cable.

3. Configuration device according to Claim 1 or 2, **characterized in that** the means for configuring an electronic detection and wire-controlled actuator comprise a button (24) associated with a switch making it possible to apply simultaneously a phase signal to a first and to a second wire of the first cable.

4. Configuration device according to one of the preceding claims, **characterized in that** the means for configuring an electronic detection and radio-controlled actuator comprise a button (25) associated with a switch making it possible to disconnect the power supply from the actuator.

5. Configuration device according to Claim 4, **characterized in that** the means for configuring an electronic detection and radio-controlled actuator comprise an electromagnetic signal transmitter.

6. Configuration device according to Claim 5, **characterized in that** the means for configuring an electronic detection and radio-controlled actuator comprise an electromagnetic signal receiver.

7. Configuration device according to one of the preceding claims, **characterized in that** it comprises means (30) for informing the user.

8. Configuration device according to one of the preceding claims, **characterized in that** it comprises a second cable (14) making it possible to connect it to an external source of electric power.

9. Configuration device according to one of the preceding claims, **characterized in that** it comprises means for applying a method of identifying the actuator type connected to the first cable, these means comprising means (40) for measuring currents in the first cable.

10. Method for automatically determining the type of an actuator, **characterized in that** it comprises a step of electric connection between the actuator and a device and a step of analysing electrical magnitudes by the device in order to determine whether the actuator is of the mechanical detection, electronic detection and wire-controlled or electronic detection and radio-controlled type.

## Patentansprüche

1. Vorrichtung (10) zur Konfiguration eines haustechnischen Antriebsorgans, das einen Elektromotor aufweist und zum Antrieb eines beweglichen Elements in einem Gebäude dient, wobei die Vorrichtung zur Konfiguration eine Bedienungsschnittstelle (11) und ein erstes Kabel (12) mit einem Stecker (13) zur lösbaren elektrischen Verbindung der Vorrichtung zur Konfiguration mit dem zu konfigurierenden Antriebsorgan enthält, **dadurch gekennzeichnet, dass** die vorrichtung Mittel (21, 22, 23) zum Konfigurieren eines Antriebsorgans mit mechanischer Erfassung, Mittel (24) zum Konfigurieren eines Antriebsorgans mit elektronischer Erfassung und Drahtsteuerung, sowie Mittel (25) zum Konfigurieren eines Antriebsorgans mit elektronischer Erfassung und Funksteuerung, wobei sämtliche Mittel auf das Anlegen einer Spannungsquelle (14, 50) zwischen mindestens zwei Leitern des ersten Kabels ansprechen.

2. Vorrichtung zur Konfiguration nach Anspruch 1, **dadurch gekennzeichnet, dass** die Mittel zum Konfigurieren eines Antriebsorgans mit mechanischer Erfassung Tasten (21, 22, 23) sind, welche Schaltern zugeordnet sind, die das Anlegen eines Phasensignals auf einen ersten oder einen zweiten Leiter des ersten Kabels ermöglichen.

3. Vorrichtung zur Konfiguration nach Anspruch 1 oder 2, **dadurch gekennzeichnet, dass** die Mittel zum Konfigurieren eines Antriebsorgans mit elektronischer Erfassung und Drahtsteuerung durch eine Taste (24) verwirklicht sind, welche einem Schalter zugeordnet ist, der das Anlegen eines Phasensignals gleichzeitig auf einen ersten und einen zweiten Leiter des ersten Kabels ermöglicht.

4. Vorrichtung zur Konfiguration nach einem der vorstehenden Ansprüche, **dadurch gekennzeichnet, dass** die Mittel zum Konfigurieren eines Antriebsorgans mit elektronischer Erfassung und Funksteuerung durch eine Taste (25) verwirklicht sind, welche einem Schalter zugeordnet ist, der das Abschalten der Energieversorgung des Antriebsorgans ermöglicht.

5. Vorrichtung zur Konfiguration nach Anspruch 4, **dadurch gekennzeichnet, dass** die Mittel zum Konfigurieren eines Antriebsorgans mit elektronischer Erfassung und Funksteuerung einen Sender elektromagnetischer Signale enthalten.

6. Vorrichtung zur Konfiguration nach Anspruch 5, **dadurch gekennzeichnet, dass** die Mittel zum Konfigurieren eines Antriebsorgans mit elektronischer Erfassung und Funksteuerung einen Empfänger elektromagnetischer Signale enthalten.

7. Vorrichtung zur Konfiguration nach einem der vorstehenden Ansprüche, **dadurch gekennzeichnet, dass** sie Mittel (30) zur Information des Benutzers enthält.

8. Vorrichtung zur Konfiguration nach einem der vorstehenden Ansprüche, **dadurch gekennzeichnet, dass** sie ein zweites Kabel (14) enthält, über das eine äussere elektrische Energiequelle anschliessbar ist.

9. Vorrichtung zur Konfiguration nach einem der vorstehenden Ansprüche, **dadurch gekennzeichnet, dass** sie Mittel zur Ausführung eines Verfahrens zur Identifizierung des Typs des Antriebsorgans aufweist, das am ersten Kabel angeschlossen ist, und dass diese Mittel Einrichtungen (40) zur Messung der Ströme im ersten Kabel enthalten.

10. Verfahren zur automatischen Ermittlung des Typs eines Antriebsorgans, **dadurch gekennzeichnet, dass** es einen Schritt einer elektrischen Verbindung zwischen dem Antriebsorgan und einer Einrichtung sowie einen Schritt der Analyse elektrischer Grössen durch die Einrichtung umfasst, um zu ermitteln, ob das Antriebsorgan ein solches mit mechanischer Erfassung, ein Antriebsorgan mit elektronischer Erfassung und Drahtsteuerung oder ein Antriebsorgan mit elektronischer Erfassung und Funksteuerung ist.
